# EUROPÄISCHE PATENTSCHRIFT

(11) **EP 0 444 044 B1**
(45) Veröffentlichungstag und Bekanntmachung des Hinweises auf die Patenterteilung: **05.01.1994**
(21) Anmeldenummer: 89908808.2
(22) Anmeldetag: 01.08.1989
(51) Int. Cl.: H01R 39/14, H02K 13/00

(54) **SCHLEIFRINGANORDNUNG**
SLIP RING ARRANGEMENT
SYSTEME DE BAGUE COLLECTRICE

(30) Priorität: 12.11.1988 DE 3838436
(43) Veröffentlichungstag der Anmeldung: 04.09.1991
(73) Patentinhaber: ROBERT BOSCH GMBH, 70442 Stuttgart (DE)
(72) Erfinder: KOPLIN, Karl-Heinz, D-7141 Schwieberdingen (DE); FASTERDING, Henning, D-7145 Markgröningen (DE)
(86) Internationale Anmeldenummer: DE8900506
(87) Internationale Veröffentlichungsnummer: WO9005395

(56) Entgegenhaltungen:
- EP-A- 0 030 725
- DE-C- 368 956
- FR-A- 2 613 880

## Beschreibung

### Stand der Technik

Die Erfindung geht aus von einer Schleifringanordnung nach dem Oberbegriff des Anspruchs 1. Bei einer bekannten Schleifringanordnung (DE-OS 35 10 489) befindet sich an einem Ende der Läuferwelle eine nach innen gerichtete Axialbohrung, die der Aufnahme einer Schleifringtragwelle dient. Die Schleifringtragwelle ist Teil einer Schleifringeinheit, bestehend aus zwei Schleifringen, den von diesen ausgehenden elektrischen, mit der Läufer-Feldspule verbundenen elektrischen Leitern und einem diese Teile insgesamt miteiannder verbindenden und aufnehmenden Isolierstoffkörper. Hierdurch ergibt sich die Einstückigkeit der Schleifringeinheit, die dadurch an der Läuferwelle befestigt ist, daß die Schleifringtragwelle im Preßsitz in die Axialbohrung der Läuferwelle eingeschoben ist.

Dabei ergibt sich eine merkliche Zweiteiligkeit dadurch, daß ein erster Isolierstoff-Teilkörper die Schleifringe lagert und von diesem Überbrückungsschenkel aus dem gleichen Isolierstoff ausgehen, in deren Innerem die Verbindungsleitungen von den Schleifringen bis zu einem Deckring geführt sind, der über diese Überbrückungschenkel mit dem Schleifringträger einstückig verbunden ist. Die Überbrückungsschenkel mit den von ihnen aufgenommenen Verbindungsleitungen liegen in Nuten am Ende der Läuferwelle und sind unter dem sich auf dieser Seite der Läuerwelle befindlichen Kugellager hindurchgeführt und mit der Wicklung des Rotors verbunden. Hierdurch gelingt es zwar, den Schleifring/Bürstenbereich von der elektrischen Maschine aus gesehen außerhalb, also hinter dem Kugellager anzuordnen; es ist aber eine zusätzliche zu umspritzende Schleifringtragwelle für die Schleifringeinheit erforderlich, die in die Läuferwellenaxialbohrung eingschoben wird, ohne daß sich hierdurch eine eindeutig auch bei entsprechender Erwärmung unbeeinflußte axiale Sicherung der Schleifringeinheit auf der Läuferwelle ergibt. Der Aufbau des bekannten Schleifringlagers ist darüber hinaus kompliziert - über die spezielle Führung und Ausbildung der Verbindungsleitungen zwischen den Schleifringen und der Erregerwicklung sind keine Angaben gemacht.

Bekannt ist aus der französischen Patentanmeldung mit der Veröffentlichungsnummer 2 593 976 ferner eine Schleifringanordnung, bei der, vergleichbar mit der Realisierungsform entsprechend der eingangs genannten DE-OS 35 10 489 vom Schleifringträger ein zentraler Stift ausgeht, der in sich die elektrischen Verbindungsleitungen führt und in eine stirnseitige Axialbohrung der Rotorwelle werden dann die elektrischen Zuleitungen zu den Anschlüssen der Erregerwicklung geführt. Auch bei dieser Schleifringanordnung befindet sich der Schleifringträger auf der anderen Seite des Kugellagers.

Aus der FR-A- 26 13 880 ist schließlich eine Schleifringanordnung nach dem Oberbegriff des Hauptanspruchs bekannt, bei dem der Schleifringhalter am Ende der Läuferwelle durch Umspritzen des Läuferwellenendes, der Anschlußleiter, der Schleifringe und einer Steckhülse mit Kunststoff in einer Spritzform hergestellt wird. Die Steckhülse ist dabei in eine Axialbohrung am Ende der Läuferwelle eingesetzt. Diese Lösung hat den Nachteil, daß hier das Ende der Läuferwelle in die Spritzform zur Herstellung des Schleifringhalters mit eingesetzt werden muß und daß ferner die Leiterenden der Schleifringanschlüsse frei nach außen vorstehen, was für ein Anschweißen von Erregerwicklungsanschlüssen problematisch ist.

Der Erfindung liegt die Aufgabe zugrunde, eine einfach aufgebaute und daher kostengünstig herzustellende und zu montierende Schleifringanordnung in einer automatisierungsgerechten Gestaltung zu schaffen, bei der sichergestellt ist, daß der Schleifringhalter auch bei Erschütterungen oder thermischer Belastung in einer radial und axial unbeeinflußbaren Position auf der Läuferwelle gehalten ist.

### Vorteile der Erfindung

Die Erfindung löst diese Aufgabe mit den kennzeichnenden Merkmalen des Anspruches 1 und hat den Vorteil, daß ein sicherer radialer und axialer Sitz der gesamten Schleifringanordnung erreicht ist, wobei sich einfache Montage mit guter Schweißzugänglichkeit und daher einer entsprechenden Reduzierung der Ausschußquote verbinden.

Die hervorragende axiale Sicherung wird bei einem ersten bevorzugten Ausführungsbeispiel dadurch erzielt, daß ein einstückiger Zapfen der Läuferwelle sich bis in den Bereich der Schleifringe erstreckt und dort infolge Pressung, z.B. auch über längs oder quer verlaufende Halterillen den eigentlichen Schleifringträger sichert, wobei ergänzend hierzu die als flache Stromschienen ausgebildeten elektrischen Verbindungsleiter in kunststoffummantelten Stegen Zwischen dem Schleifringträger und der Endscheibe angeordnet sind, die wiederum durch das angrenzende Kugellager axial gesichert ist, was zu einer entsprechenden axialen Sicherung des Schleifringträgerbereichs über die Verbindungsstege führt.

Bei einer bevorzugten Ausführungsform wird eine axiale Sicherung durch die formschlüssige Hintergreifung von Verriegelungszungen sichergestellt, die vom Bereich des Schleifringträgers ausgehen, wobei auch bei dieser Ausführungsform ein in die Läuferwelle zunächst ohne Rücksicht auf die Schleifringanordnung und daher entsprechend fest und sicher eingepreßter Bolzen bis in den Bereich der Schleifringe geführt ist. Für absolute Spielfreiheit sorgen am Ende des Schleifringträgers angeordnete, auf die Bolzenstirnseite pressende Federzungen.

Es ergibt sich daher bei beiden Ausführungsformen eine besonders automatisierungsgerechte Gestaltung.

Durch die in den Unteransprüchen aufgeführten Maßnahmen sind vorteilhafte Weiterbildungen und Verbesserungen der im Anspruch 1 bzw. im Anspruch 2 angegebenen Schleifringanordnung möglich. Besonders vorteilhaft ist die großflächige Verschweißung der abgebogenen Stromschienen als elektrische Verbindungsleitungen zwischen den Schleifringen und der Erregerwicklung des Rotors an der Innenfläche der Schleifringe durch Widerstandsschweißen und die allseitige Einbettung der flachen Stromschienen von dem Kunststoff der Preßform des Trägergehäuses.

Vorteilhaft ist ferner, daß die Endscheibe des Schleifringhalters mit dem B-seitigen Lüfter bzw. Ventilator aus einem Stück hergestellt sein kann,' wobei in das Kunststoffteil der Endscheibe die Metallteile für den Lüfter mit eingelegt und umspritzt sind.

### Zeichnung

Ausführungsbeispiele der Erfindung sind in der Zeichnung dargestellt und werden in der nachfolgenden Beschreibung im einzelnen näher erläutert. Es zeigen:
- Fig. 1: in einer größeren, Zusammenhänge darstellenden Zeichnung im Schnitt die Zuordnung und Montage der Schleifringanordnung zum dargestellten Rotor eines Wechselstromgenerators, dessen sonstige Teile weggelassen sind;
- Fig. 2: die auf den Läuferwellenendbereich aufgesetzte Schleifringanordnung im Schnitt in einer ersten Ausführungsform und
- Fig. 3: die Darstellung der Fig. 2 in einer Ansicht von links, während
- Fig. 4: die gleiche Schleifringanordnung wie Fig. 2, lediglich um 90° in der Schnittdarstellung gedreht angibt;
- Fig. 5: zeigt die Ausführungsform der Figuren 2, 3 und 4 in Draufsicht; die
- Fig. 6 und 7: zeigen die mit den Schleifringen innen durch Widerstandsschweißung verbundenen, gebogenen elektrischen Stromschienen, teilweise im Schnitt, während die
- Fig. 8: die Stromschienenbefestigung in einer Ansicht von vorn zeigt; die
- Fig. 9, 10 und 11: sind den Figuren 2, 4 und 5 in dieser Reihenfolge entsprechende Schnitt- und Draufsichtdarstellungen einer bevorzugten Ausführungsform einer Schleifringanordnung, während
- Fig. 12: die Schleifringlageranordnung der Fig. 11 in einer Ansicht von der Seite mit Darstellung der Federzungen zur axialen Spielfreiheit zeigt.

### Beschreibung der Ausführungsbeispiele

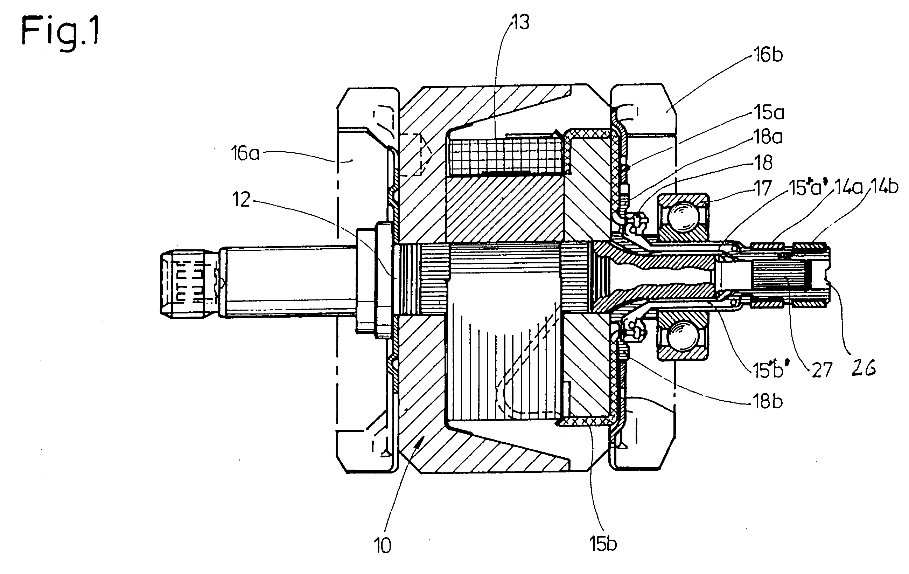

In der Darstellung der Fig. 1, die zum besseren Verständnis der Erfindung dient, ist ein Klauenpolläufer 10 einer elektrischen Maschine, nämlich eines Drehstromgenerators für Kraftfahrzeuge u. dgl. dargestellt, wobei auf der Läuferwelle 12 die elektrische Erregerwicklung 13 gelagert ist, der von den beiden Schleifringen 14a, 14b über elektrische Verbindungsleitungen 15a, 15b der erforderliche Erregerstrom zugeführt ist. Beidseitige Lüfterflügel sind mit 16a und 16b bezeichnet; das B-seitige Kugellager 17 liegt zwischen den Schleifringen 14a, 14b und den zur Erregerwicklung 13 Weiterführenden elektrischen Verbindungsleitung 15a und 15b, so daß die Stromschienen 15a', 15b', die Teil der elektrischen Verbindungsleitungen sind, unter dem Kugellager 17 hindurch geführt sind. An ihren verbreiterten Enden 18 sind dann die Anschlußdrähte der Erregerwicklung befestigt, üblicherweise punktverschweißt. Dabei sind die Schleifringbaugruppe und der Lüfter, wie Fig. 1 zeigt, separate Teile.

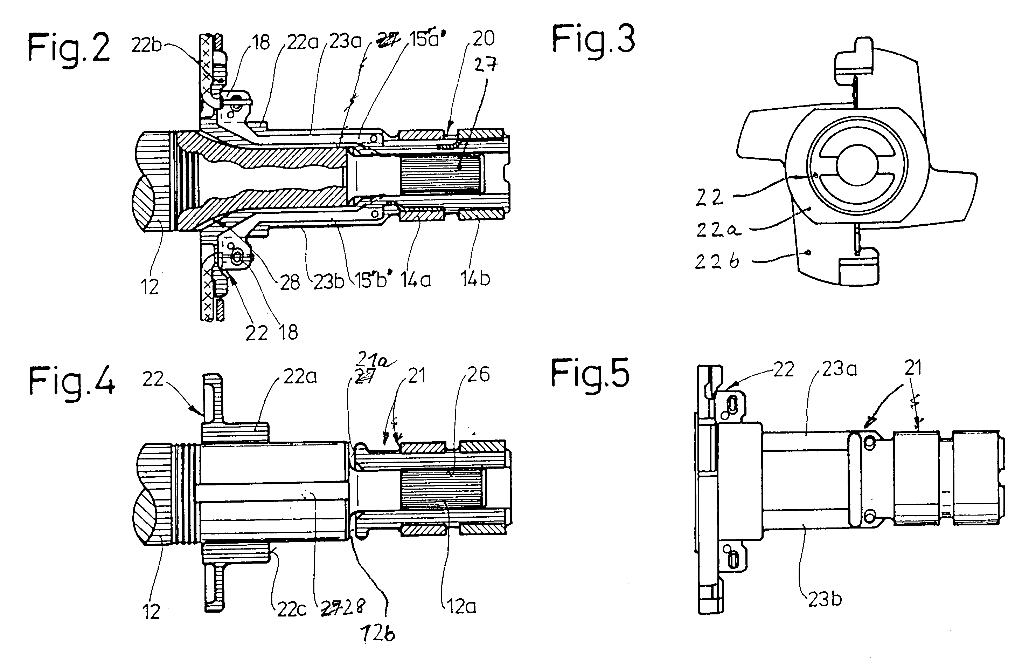

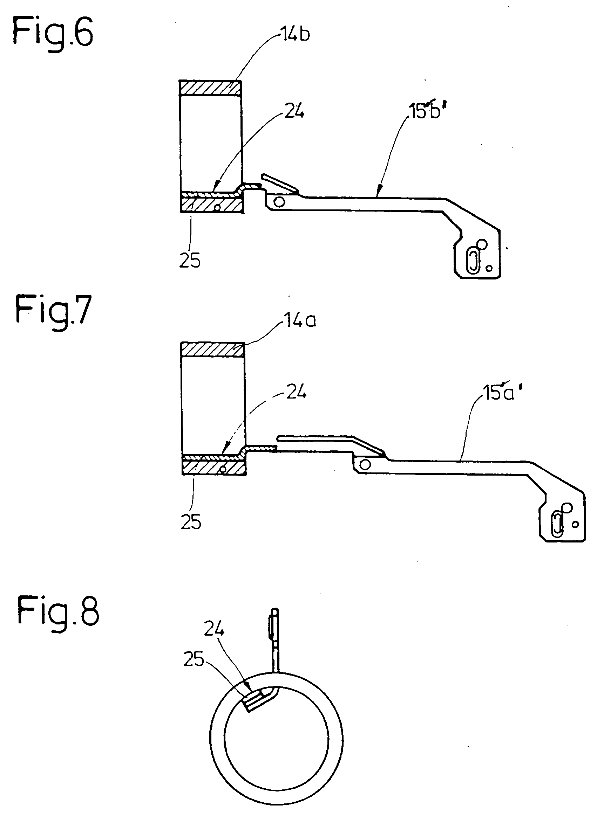

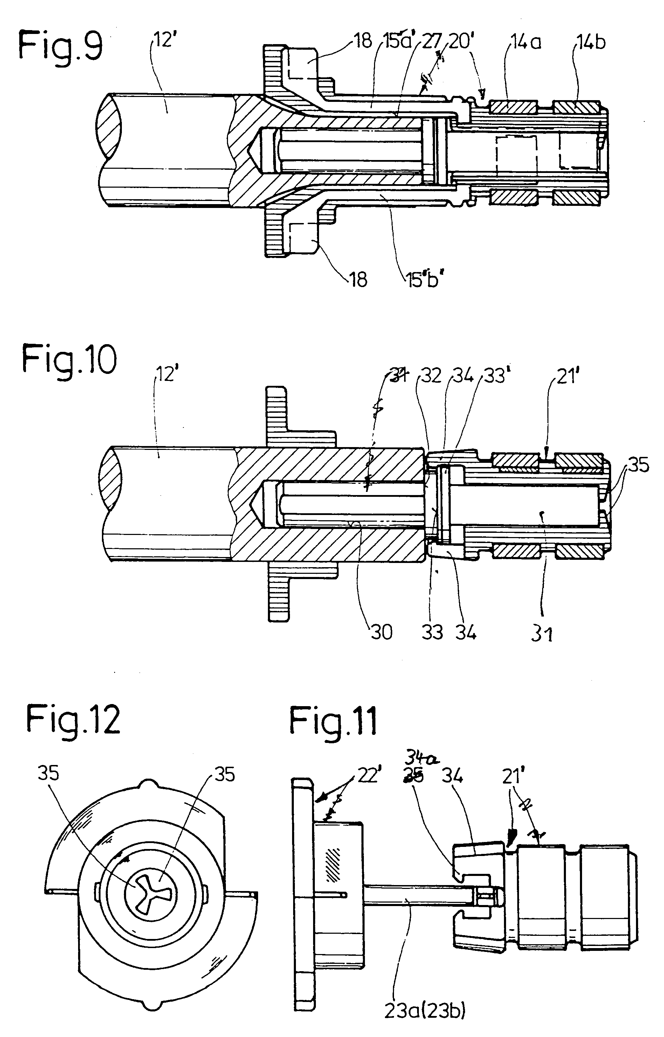

Die beiden Schleifringe 14a, 14b und die Stromschienen 15a', 15b' sind Teil eines einstückigen Schleifringhalters, wie er in den Figuren 2, 4 und 5 bzw. 9, 10 und 11 gezeigt und mit 20 bzw. 20' (Figuren 9, 10 und 11) bezeichnet ist. Der Schleifringhalter 20, 20' besteht, wie am besten die Figuren 5 bzw. 11 zeigen, aus zwei Teilbereichen, und zwar dem Träger 21, 21' (Fig. 11) für die Schleifringe und einer mit diesem Träger 21, 21' einstückig verbundenen Endscheibe 22, 22', die axial abgesetzt mit dem Träger 21, 21' über zwei diametral gegenüberliegende Verbindungsstege 23a, 23b verbunden ist. Diese Verbindungsstege enthalten die kunststoffummantelten elektrischen Stromschienen 15a', 15b', die in den Figuren 6 und 7 als gebogene Flachbänder aus einem entsprechenden, elektrisch gut leitenden Metall in größerem Maßstab dargestellt sind.

Man erkennt aus den Figuren 6 und 7 mit Fig. 8, daß eine kürzere Stromschiene 15b' und eine längere Stromschiene 15a' zur Verbindung des von der Erregerwicklung bzw. der Endscheibe weiter entfernten äußeren Schleifringes 14b vorgesehen sind, wobei die flachen Metallbänder der beiden Stromschienen als anfängliche Stanzform entsprechend den Anforderungen abgebogen und mit ihrem einen Ende bei 24 mit der Innenwandung des jeweiligen Schleifrings durch einen endständigen breiteren Lappen 25 verbunden, nämlich vorzugsweise durch Widerstandsschweißung am Schleifring befestigt sind. Im mittleren Bereich verlaufen die Flachbänder der Stromschienen dann in den Verbindungsstegen 23a, 23b und treten dann mit ihren verbreiterten Enden 18 (siehe Fig. 1) aus dem verbreiterten Nabenbereich 22a des Endscheiben-Körpers nach außen.

Der ganze Aufbau eines solchen Schleifringhalters ist einstückig, wobei die beiden in den Fig. 6 und 7 gezeigten Metallteile der Schleifringe und der Stromschienen (schon miteinander verbunden) entweder in eine entsprechende Spritzgußform für die Herstellung des Kunststoff-Spritzteils für den Schleifringhalter eingelegt oder auf andere Art und Weise, beispielsweise durch Umpressen mit einem geeigneten Isolier-Kunststoff die endgültige Gestalt des in den Figuren gezeigten Schleifringhalters annehmen. Dabei sind lediglich die äußeren Zylinderflächen der Schleifringe 14a, 14b sowie die verbreiterten Enden 18 der Verbindungsleitungen 15a', 15b' nicht vom Kunststoff bedeckt.

Zum Verbinden des Schleifringhalters bzw. zum Ansetzen an das diesseitige Läuferwellenende ergeben sich zwei Ausführungsformen, wobei entsprechend den Figuren 2 bis 5 als bevorzugtes Ausführungsbeispiel so vorgegangen wird,,daß ein angedrehter, also vorzugsweise einstückig mit der Läuferwelle 12 verbundener Zapfen 12a in die innere Öffnung bzw. Bohrung 26 des Trägerteils 21 für die Schleifringe im Preßsitz eingeschoben und über geeignete Halte-Querrillen und/oder Längsrillen 27 (s. Figuren 4 und 1) axial verankert und befestigt wird. Eine vordere Fläche 21a des Trägerteils 21 stößt dann an die Abschulterung 12b im Übergang zwischen dem Wellendurchmesser und dem Zapfen 12a an, wobei die im Durchmesser größere Habe 22a der Endscheibe 22 weiter auf die Läuferwelle 12 aufgeschoben ist. Die Verbindungsstege 23a, 23b verlaufen dann in Längsnuten 28 der Läuferwelle, aus denen sie, wie bei 22a in Fig. 2 gezeigt, allmählich im Übergang zum hinteren Flansch 22b der Endscheibe 22 heraustreten. Dieser Flansch 22b des Schleifringhalters 20, 20' dient dann gleichzeitig der Zentrierung des B-Lüfters 16b bzw. der Flansch kann entsprechend einem bevorzugten Ausführungsbeispiel vorliegender Erfindung einstückig in den B-Lüfter übergehen, wobei von Anfang an der Schleifringhalter mit seinem Isolierkunststoff-Trägergehäuse zusammen mit dem B-Lüfter hergestellt wird. Die Metallteile des Lüfters können dann bei diesem Ausführungsbeispiel zusammen mit den in den Figuren 6 und 7 gezeigten Teilen (Schleifringe und Stromschienen) ebenfalls in die Spritzform mit eingelegt und umspritzt werden bzw. umpreßt werden.

Auf diese Weise ergibt sich ein kurzbauender Kompaktgenerator mit sicherem Sitz des Schleifringhalters auf dem Lüfterwellenende, denn durch das bis zum Anschlag an die Nabenstirnwandung 22c mit seinem Innenring herangeschobene Kugellager 17 hält der ganze Aufbau in der endmontierten Zuordnung entsprechend Fig. 1 radial und axial unverrückbar.

Das in den Figuren 9 bis 12 dargestellte zweite Ausführungsbeispiel eines Schleifringhalters unterscheidet sich von der im vorhergehenden erläuterten Ausführungsform lediglich durch die Art der Befestigung auf dem Läuferwellenende. In diesem Fall ist bei sonst gleicher Ausführungsform in eine stirnseitige Axialbohrung 30 der Läuferwelle 12' ein Bolzen 31 eingepreßt, und zwar ohne daß auf den Schleifringhalter und seinen Kunststoffaufbau zunächst Rücksicht genommen zu werden braucht. Der Bolzen 31 sitzt daher sicher und unverrückbar im Preßsitz im Läuferwellenende, wobei alternativ auch die Möglichkeit besteht, die noch im einzelnen zu erläuternde Bolzenform auch durch einen angedrehten Zapfen wie bei dem vorherigen Ausführungsbeispiel zu ersetzen.

Der Bolzen weist angrenzend an die Abschlußstirnwand 32 der Läuferwelle 12', jedoch im vorgegebenen Abstand zu dieser eine Abschulterung 33 auf, die von vom Trägerteil 21' ausgehende, an dieses einstückig angesetzte Rasthaken 34 mit Quernasen 34a (s. Figuren 10 und 11) hintergriffen ist. Dabei setzt sich der Bolzen von der Abschulterung ausgehend in der Zeichnung der Figuren 10 und 11 weiter nach rechts mit unterschiedlichem oder gleichem Durchmesser fort, praktisch bis zum Ende des Trägerteils 21'.

Das Trägerteil 21' weist an dieser Stelle, wie am besten der Darstellung der Fig. 12 in Draufsicht entnommen werden kann, vom Umfang nach innen ausgehende und axial nach innen mit einer gewissen Vorspannung weisende federnde Zungen 35 auf, die dann, wenn die Rasthaken 34 die Schulter 33 am Bolzen hintergriffen haben, soweit zurückgedrängt, also axial nach außen gedrückt sind, daß sich von diesen Federzungen 35 ausgehend eine ständige axiale Vorspannung und daher ein sicherer Sitz des Trägerteils 21' und damit auch des gesamten Schleifringhalters 20' auf dem Wellenende bzw. dem Bolzen 31 ergibt. Auch hier ist dann die Endscheibe 22' weiter auf die Welle mit vergrößertem Durchmesser aufgeschoben, wobei die Verbindungsstege 23a, 23b, und hier unterscheidet sich diese Ausführungsform in nichts von dem an erster Stelle erläuterten Ausführungsbeispiel, in Längsnuten 27 des Wellenendes verlaufen.

Ist der Bolzen 31 von einem angedrehten Zapfen des Läuferwellenendes gebildet, dann ist darauf zu achten, daß die Abschulterung 33 in gleicher Weise ausgebildet wird, damit sich durch das Hintergreifen der Rasthaken 34 die axiale Sicherung des Schleifringhalters auf dem Läuferwellenende, zusätzlich zu der von dem Kugellager gebildeten Anschlagwirkung, ergibt.

Vorteilhaft ist, daß der Flansch der Schleifringbaugruppe bei den gezeigten Ausführungsformen außer zur Lüfterzentrierung und -fixierung auch noch als Anschlag für die Kugellagermontage dient.

Schließlich sind, wie Fig. 1 zeigt, für die elektrischen Leitungsanschlüsse der Erregerwicklung am Schleifringbaugruppen-Flansch zwei Haltenocken 18a, 18b vorgesehen, welche für die elektrischen Anschlüsse als Zugentlastung dienen. Außerdem Positionieren diese Haltenocken die elektrischen Leitungen bei der Widerstandsschweißung.

## Patentansprüche

1. Schleifringanordnung für den Läufer (10) einer elektrischen Maschine - insbesondere Drehstromgenerator für Kraftfahrzeuge, Bahnen, Busse und dgl. - mit einer den Läufer (10) tragenden Läuferwelle (12, 12') und einem auf dieser endseitig angeordneten Schleifringhalter (20, 20') mit Schleifringen (14a, 14b) und diese mit der Erregerwicklung (13) des Läufers verbindenden Anschlußleitern (15a', 15b') wobei die Schleifringe (14a, 14b) und die Anschlußleiter (15a', 15b') in einem einstückigen Trägerteil (21, 21') aus Kunststoff eingebettet sind, der auf einem an der Läuferwelle (12, 12') endseitig angeordneten Zapfen (12a, 31) geringeren Durchmessers befestigt ist, dadurch gekennzeichnet, daß die Anschlußleiter (15a', 15b') mit ihren den Schleifringen (14a, 14b) abgewandten Endteil (18) vor einer Endscheibe (22, 22') aus dem Trägerteil (21, 21') heraustreten, daß die Endscheibe (22, 22') mit dem Trägerteil (21, 21') einstückig hergestellt ist und daß der so vorgefertigte Schleifringhalter (20, 20') auf den endseitigen Zapfen (12a, 31) der Läuferwelle (12, 12') aufgeschoben ist.

2. Schleifringanordnung nach Anspruch 1, dadurch gekennzeichnet, daß der Schleifringhalter (20') auf den endseitigen zapfen (31) der Läuferwelle (12) aufgeschoben und durch eine Rastbefestigung (33, 34) gehalten ist.

3. Schleifringanordnung nach Anspruch 2, dadurch gekennzeichnet, daß der Zapfen (31) einen eine Abschulterung (33) bildenden Ringvorsprung (33') im Abstand zum Läuferwellenende aufweist, der von Rasthaken (34) am Trägerteil (21') für die Schleifringe (14a, 14b) hintergriffen ist.

4. Schleifringanordnung nach Anspruch 3, dadurch gekennzeichnet, daß Federzungen (35) am Trägerteil (21') vorgesehen sind, die nach dem Einrasten der Rasthaken (34) des Schleifringhalters (20') am Ende des Zapfens (31) zur axialen Spielfreiheit anliegen.

5. Schleifringanordnung nach Anspruch 4, dadurch gekennzeichnet, daß die Federzungen (35) am abgewandten Ende des Trägerteils (21') des Schleifringhalters (20') von außen radial nach innen vorspringen und gleichzeitig axial nach innen gerichteten Lappen am Trägerteil (21') bilden, die nach dem Hintergreifen der Abschulterung (33) vom Läuferwellenende axial so weit nach außen gedrückt und hierdurch vorgespannt werden, daß sich ein ständiger, den Schleifringhalter (20') axial fixierender Preßdruck ergibt.

6. Schleifringanordnung nach Anspruch 1, dadurch gekennzeichnet, daß der bis in den hinteren Bereich des Trägerteils (21) für die Schleifringe (14a, 14b) vordringende, an die Läuferwelle (12) angedrehte Zapfen (12a) Längs- und/oder Querhalterillen (27) zur radialen Sicherung des im Preßsitz aufgenommenen Trägerteils (21) des Schleifringhalters (20) aufweist.

7. Schleifringanordnung nach einem der Ansprüche 1 bis 6, dadurch gekennzeichnet, daß die Anschlußleiter (15a', 15b') von Stromflachschienen gebildet sind, die mit ihrem einen Ende an der Innenfläche des jeweiligen Schleifrings (14a, 14b) befestigt sind.

8. Schleifringanordnung nach Anspruch 7, dadurch gekennzeichnet, daß die Stromschienen (15a', 15b') metallische, durch Stanzung hergestellte und entsprechend abgebogene Bandformen sind und mit ihrem erweiterten Endteil vor einem Radialflansch (22b) der Endscheibe (22) aus dem Kunststoff heraustreten zur Verbindung mit elektrischen Leitungsanschlüssen (15a, 15b) der Erregerwicklung (13).

9. Schleifringanordnung nach einem der mehreren der Ansprüche 1 bis 8, dadurch gekennzeichnet, daß der auf der Seite des Schleifringhalters (20, 20') angeordnete Lüfter (16b) von dem von der Endscheibe (22, 22') des Schleifringhalters (20, 20') ausgehenden Flansch (22b) zentriert wird.

10. Schleifringanordnung nach einem der Ansprüche 1 bis 9, dadurch gekennzeichnet, daß der Schleifringhalter (20, 20') im Bereich der Endscheibe (22, 22') mit dem Lüfter (16b) aus einem Stück besteht.

11. Schleifringanordnung nach Anspruch 10, dadurch gekennzeichnet, daß die den Lüfter (16b) bildenden Metallteile zusammen mit den Schleifringen und den Stromschienen vom Kunststoffmaterial des Trägerteils für den Schleifringhalter umspritzt oder umpreßt sind.

12. Schleifringanordnung nach Anspruch 3, dadurch gekennzeichnet, daß der Zapfen am Läuferwellenende von einem in die Läuferwelle (12) eingepreßten Lagerbolzen (31) gebildet ist.

## Claims

1. Slip ring arrangement for the rotor (10) of an electrical machine - in particular of an alternator for motor vehicles, railways, buses, and the like - with a rotor shaft (12) supporting the rotor (10) and a slip ring holder (20, 20') located on its end, with slip rings (14a, 14b) and connecting leads (15'a, 15'b) which connect these with the exciter winding (13) of the rotor, in which the slip rings (14a, 14b) and the connecting leads (15'a, 15'b) are embedded in a one-piece plastic support part (21, 21'), which is fixed on a spigot (12a, 31) of smaller diameter, arranged on the end of the rotor shaft (12), characterised by the fact that the connecting leads (15'a, 15'b) emerge with their end part (18) which is remote from the slip rings (14a, 14b), in front of an end disc (22, 22') from the support part (21, 21'), that the end disc (22, 22') is made in one piece with the support part (21, 21') and that the thus prefabricated slip ring holder (20, 20') is pushed on the end face spigot (12a, 31) of the rotor shaft (12).

2. Slip ring arrangement for the rotor (10) of an electrical machine - in particular of an alternator for motor vehicles, railways, buses, and the like - with a rotor shaft (12) supporting the rotor (10) and a slip ring holder (20) with slip rings (14a, 14b) located on its end, and connecting leads (15'a, 15'b) which connect these with the exciter winding (13) of the rotor, in which the slip rings (14a, 14b) and the connecting leads (15'a, 15'b) are embedded in a plastic support part (21'), which is fixed on a tapered spigot (31) of the rotor shaft (12'), characterised by the fact that the slip ring holder (20') is pushed onto the end spigot (31) of the rotor shaft (12) and held by a circlip (33, 34).

3. Slip ring arrangement in accordance with claim 2, characterised by the fact that the spigot (31) has a ring-shaped projection (33') which forms a shoulder at a distance from the rotor shaft end, which is embraced from behind by locking hooks (34) on the support part (21') for the slip rings (14a, 14b).

4. Slip ring arrangement in accordance with claim 3, characterised by the fact that springy tongues (35) are provided which, after engagement of the locking hooks (34) of the slip ring holder (20') rest against the end of the spigot (31) to provide an axial zero backlash condition.

5. Slip ring arrangement in accordance with claim 4, characterised by the fact that the springy tongues (35) at the remote end of the support part (21') of the slip ring holder (20') project radially inwards and at the same time axially inward directed lobes on the support part (21') are formed, which after rearward embracing of the shoulder (33) are pressed axially outwards to such an extent that a constant pressure results which axially fixes the slip ring holder (20).

6. Slip ring arrangement in accordance with claim 1, characterised by the fact that the spigot (12a) machined on the rotor shaft(12) which projects up to the rear area of the support part (21) for the slip rings (14a, 14b) has longitudinal and/or transverse holding grooves (26) to radially secure the press-fit located support part (21) of the slip ring holder (20).

7. Slip ring arrangement in accordance with one of the claims 1 to 6, characterised by the fact that the electrical connection leads (15'a, 15'b) are formed by flat conductor rails which with their one end are fixed to the inner face of the particular slip ring (14a, 14b).

8. Slip ring arrangement in accordance with claim 7, characterised by the fact that the conductor rails (15'a, 15'b) are metallic band forms produced by punching and are appropriately bent off, and which emerge with an expanded end part in front of a radial flange (22b) of the end disc (22) from the insulating plastic for the connection with electrical lead connections (15a, 15b) of the exciter winding (13).

9. Slip ring arrangement in accordance with one or more of the claims 1 to 8, characterised by the fact that the fan (16b) arranged on the side of the slip ring holder (20, 20') is centered by the flange (22b) which extends from the end plate (22, 22') of the slip ring holder (20, 20').

10. Slip ring arrangement in accordance with one of the claims 1 to 9, characterised by the fact that the slip ring holder (20, 20') in the area of the end plate (22, 22') and the fan (16b) consist of one piece.

11. Slip ring arrangement in accordacne with claim 10, characterised by the fact that the metal parts which form the fan (16b) are encased together with the slip rings and the conductor rails, having the plastic material of the support housing injection moulded or pressed around them.

12. Slip ring arrangement in accordance with claim 3, characterised by the fact that the spigot at the rotor shaft end is formed by a bearing bolt (31) pressed into the rotor shaft (12).

## Revendications

1. Système de bagues collectrices pour le rotor (10) d'une machine électrique (notamment d'un alternateur pour véhicule automobile, véhicule ferroviaire, autobus ou analogue), comprenant un axe de rotor (12, 12') portant le rotor (10) et un support de bagues collectrices (20, 20') monté à une extrémité de cet axe et portant les bagues collectrices (14a, 14b) et des conducteurs de raccordement (15a', 15b') reliant ces bagues collectrices à l'enroulement d'excitation (13) du rotor, les bagues collectrices (14a, 14b) et les conducteurs de raccordement (15a', 15b') étant noyés dans une pièce de support (21, 21') en une seule pièce en matière plastique, cette pièce de support étant fixée sur un téton (12a, 31) de diamètre plus petit prévu à l'extrémité de l'axe de rotor (12, 12'), système caractérisé en ce que les conducteurs de raccordement (15a', 15b') et leur pièce d'extrémité (18) opposée aux bagues collectrices (14a, 14b) sorte de la pièce de support (21, 21') en amont de la rondelle d'extrémité (22, 22'), cette dernière faisant corps avec la pièce de support (21, 21') et le support de bagues collectrices (20, 20') préfabriqué est glissé sur le téton d'extrémité (12a, 31) de l'axe de rotor (12, 12').

2. Système de bagues collectrices selon la revendication 1, caractérisé en ce que le support de bagues collectrices (20') est glissé sur le téton d'extrémité (31) de l'axe de rotor (12) et est maintenu par une fixation à encliquetage (33, 34).

3. Système de bagues collectrices selon la revendication 2, caractérisé en ce que le téton (31) comporte une saillie annulaire (33') formant un épaulement (33) à une certaine distance de l'extrémité de l'axe de rotor, et les crochets de verrouillage (34) portés par la pièce de support (21') des bagues collectrices (14a, 14b) viennent prendre derrière cet épaulement.

4. Système de bagues collectrices selon la revendication 3, caractérisé en ce que la pièce de support (21') porte des languettes élastiques (35) qui s'appliquent après accrochage des becs (34) du support de bagues collectrices (20') sur l'extrémité du téton (31) pour bloquer le jeu axial.

5. Système de bagues collectrices selon la revendication 4, caractérisé en ce que les languettes élastiques (35) de l'extrémité opposée de la pièce de support (21') du support de bagues collectrices (20') sont des languettes prévues sur la pièce (21') en étant en saillie radialement de l'extérieur vers l'intérieur et axialement vers l'intérieur, ces languettes étant repoussées vers l'extérieur dans la direction axiale par rapport à l'extrémité de l'axe du rotor après venue en prise derrière l'épaulement (33) pour être ainsi poussées et précontraintes de façon à créer une pression constante bloquant axialement le support de bagues collectrices (20').

6. Système de bagues collectrices selon la revendication 1, caractérisé en ce que le téton (12a) tourné sur l'arbre de rotor (12) et qui avance jusque dans la zone arrière de la pièce de support (21') des bagues collectrices (14a, 14b) comporte des rainures longitudinales et/ou transversales (27) pour le blocage radial de la pièce de support (21) du support de bagues collectrices (20), cette pièce étant frettée.

7. Système de bagues collectrices selon l'une des revendications 1 à 6, caractérisé en ce que les conducteurs de raccordement (15a', 15b') sont formés par des rails électriques plats fixés par une de leurs extrémités sur la surface intérieure de la bague collectrice respective (14a, 14b).

8. Système de bagues collectrices selon la revendication 7, caractérisé en ce que les rails électriques (15a', 15b') sont des pièces en forme de bandes métalliques fabriquées par estampage et recourbées de manière appropriée, dont l'extrémité élargie sort de la matière plastique en amont de la bride radiale (22b) de la rondelle d'extrémité (22) pour être reliée aux bornes de liaison électrique (15a, 15b) de l'enroulement d'excitation (13).

9. Système de bagues collectrices selon l'une des revendications 1 à 8, caractérisé en ce que le ventilateur (16b) prévu d'un côté du support de bagues collectrices (20, 20') est centré par la bride (22b) partant de la rondelle d'extrémité (22, 22') du support de bagues collectrices (20, 20').

10. Système de bagues collectrices selon l'une des revendications 1 à 9, caractérisé en ce que le support de bagues collectrices (20, 20') est réalisé en une seule pièce avec le ventilateur (16b) au niveau de la rondelle d'extrémité (22, 22').

11. Système de bagues collectrices selon la revendication 10, caractérisé en ce que les pièces métalliques formant le ventilateur (16b) ainsi que les bagues collectrices et les rails électriques, sont injectées dans la matière plastique de la pièce de support du support des bagues collectrices ou sont pressées dans cette matière plastique.

12. Système de bagues collectrices selon la revendication 3, caractérisé en ce que le téton à l'extrémité de l'axe du rotor est formé par un goujon de palier (31) fretté dans l'axe de rotor (12).
